# EUROPÄISCHE PATENTSCHRIFT

(11) **EP 3 321 009 B1**
(45) Veröffentlichungstag und Bekanntmachung des Hinweises auf die Patenterteilung: **07.07.2021**
(21) Anmeldenummer: 17185010.0
(22) Anmeldetag: 04.08.2017
(51) Int. Cl.: B29C 64/153, B29C 64/371, B22F 3/105, B33Y 10/00, B33Y 30/00

(54) **VORRICHTUNG ZUR ADDITIVEN HERSTELLUNG DREIDIMENSIONALER OBJEKTE**
APPARATUS FOR ADDITIVE MANUFACTURING OF THREE-DIMENSIONAL OBJECTS
DISPOSITIF DE FABRICATION ADDITIVE D'OBJETS TRIDIMENSIONNELS

(30) Priorität: 14.11.2016 DE 102016121770
(43) Veröffentlichungstag der Anmeldung: 16.05.2018
(73) Patentinhaber: CL Schutzrechtsverwaltungs GmbH, 96215 Lichtenfels (DE)
(72) Erfinder: Dressel, Tobias, 96352 Wilhelmsthal (DE); Diller, Christian, 96215 Lichtenfels (DE); Engel, Viktor, 96450 Coburg (DE); Bechmann, Florian, 96215 Lichtenfels (DE)
(74) Vertreter: Hafner & Kohl PartmbB

(56) Entgegenhaltungen:
- EP-A1- 3 015 197
- WO-A1-2015/189619
- DE-A1-102014 000 022
- DE-C1- 19 853 947

## Beschreibung

Die Erfindung betrifft eine Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial in einer vorrichtungsseitigen Prozesskammer mit definierten Prozesskammerhöhe aufweist, umfassend eine Strömungseinrichtung, welche zur Erzeugung einer die Prozesskammer zwischen einem Einströmbereich und einem Ausströmbereich durchströmenden, insbesondere inerten, Gasströmung eingerichtet ist.

Derartige Vorrichtungen sind zur additiven Herstellung dreidimensionaler Objekte an und für sich bekannt. Vermittels entsprechenden Vorrichtungen werden herzustellende dreidimensionale Objekte durch sukzessives schichtweises selektives Belichten und damit einhergehendes sukzessives schichtweises selektives Verfestigen von Baumaterialschichten in den dem schichtbezogenen Querschnitt des herzustellenden Objekts entsprechenden Bereichen aus einem vermittels eines Energiestrahls verfestigbaren Baumaterial in einer Prozesskammer additiv aufgebaut.

Um prozessbedingt entstehende partikuläre Verunreinigungen, d. h. insbesondere Rauch- und/oder Schmauchpartikel, aus der Prozesskammer zu entfernen, ist es bekannt, eine Strömungseinrichtung vorzusehen, welche zur Erzeugung einer die Prozesskammer zwischen einem prozesskammerseitigen Einströmbereich und einem prozesskammerseitigen Ausströmbereich durchströmenden, insbesondere inerten, Gasströmung eingerichtet ist.

Es besteht ein steter Weiterentwicklungsbedarf jeweiliger Strömungseinrichtungen im Hinblick auf die Effizienz der Entfernung prozessbedingt entstehender partikulärer Verunreinigungen aus der Prozesskammer.

WO 2015/189619 A1 offenbart eine additive Fertigungseinrichtung mit einer Strömungseinrichtung für ein Prozessgas.

EP 3 015 1987 A1 offenbart eine additive Fertigugnseinrichtung, umfassend einen Bauraum für ein schichtweises, aufeinanderfolgendes Verfestigen mindestens eines verfestigbaren Werkstoffs in vordefinierten Bereichen zum schichtweisen Aufbau des dreidimensionalen Objekts und mindestens eine Einströmdüse und mindestens eine Absaugdüse für ein Prozessgas.

DE 10 2014 000 022 A1 offenbart eine additive Fertigungseinrichtung mit einer Strömungseinrichtung für ein Prozessgas.

DE 198 53 947 C1 offenbart eine additive Fertigungseinrichtung mit einer Strömungseinrichtung für ein Prozessgas.

Der Erfindung liegt die Aufgabe zugrunde, eine, insbesondere im Hinblick auf die Effizienz der Entfernung prozessbedingt entstehender partikulärer Verunreinigungen aus der Prozesskammer, verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial in den dem schichtbezogenen Querschnitt des herzustellenden Objekts entsprechenden Bereichen in eingerichtet. Bei dem Baumaterial kann es sich insbesondere um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Eine Vorrichtung zur additiven Herstellung dreidimensionaler Objekte umfasst die zur Durchführung additiver Bauvorgänge typischerweise erforderlichen Funktionskomponenten. Hierzu zählen insbesondere eine Beschichtungseinrichtung, welche zur Ausbildung selektiv zu verfestigender Baumaterialschichten (in der Bauebene der Vorrichtung) eingerichtet ist, und eine Belichtungseinrichtung, welche zur selektiven Belichtung selektiv zu verfestigender Baumaterialschichten (in der Bauebene der Vorrichtung) eingerichtet ist. Die Beschichtungseinrichtung kann mehrere Bestandteile umfassen, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung kann mehrere Bestandteile umfassen, d. h. z. B. eine Strahlerzeugungseinrichtung zur Erzeugung eines Energie- bzw. Laserstrahls, eine Strahlablenkeinrichtung (Scannereinrichtung) zur Ablenkung eines von der Strahlerzeugungseinrichtung erzeugten Energie- bzw. Laserstrahls auf einen zu belichtenden Bereich einer selektiv zu verfestigenden Baumaterialschicht sowie diverse optische Elemente, wie z. B. Filterelemente, Objektivelemente, Linsenelemente, etc.

Die Vorrichtung umfasst eine inertisierbare Prozesskammer. Die Prozesskammer ist durch Prozesskammerbegrenzungen räumlich-körperlich begrenzt. Die Prozesskammer weist eine durch eine obere und eine untere Prozesskammerbegrenzung definierte Prozesskammerhöhe auf. Bei einer oberen Prozesskammerbegrenzung kann es sich um eine die Prozesskammer deckenseitig begrenzende Prozesskammerwandung handeln. Bei einer unteren Prozesskammerbegrenzung kann es sich um eine die Prozesskammer bodenseitig begrenzende Prozesskammerwandung handeln. Bei einer unteren Prozesskammerbegrenzung kann es sich auch um eine Oberfläche bzw. -seite einer wenigstens ein Pulvermodul, insbesondere ein Baumodul, in dessen Pulveraufnahmeraum (Bauraum) die eigentliche additive Herstellung dreidimensionaler Objekte erfolgt, umfassenden Pulvermodulmodulbaugruppe handeln. Eine entsprechende Pulvermodulbaugruppe kann über pulvermodulbaugruppenseitige (mechanische) Andockschnittstellen an einen prozesskammerseitige (mechanische) Andockschnittstellen umfassenden Andockbereich an eine Prozesskammerwandung, insbesondere an eine die Prozesskammer seitlich begrenzende Prozesskammerwandung, andockbar sein.

Die Vorrichtung umfasst eine Strömungseinrichtung, welche zur Erzeugung einer die Prozesskammer zwischen einem prozesskammerseitigen Einströmbereich und einem prozesskammerseitigen Ausströmbereich durchströmenden, insbesondere inerten, Gasströmung, d. h. z. B. einer Argon- oder Stickstoffströmung, eingerichtet ist. Der prozesskammerseitige Einströmbereich und der prozesskammerseitige Ausströmbereich sind typischerweise einander gegenüber liegend, insbesondere in die Prozesskammer seitlich begrenzenden, Prozesskammerbegrenzungen bzw. -wandungen, angeordnet oder ausgebildet. Die Gasströmung durchströmt die Prozesskammer insbesondere über deren gesamte Breite bzw. Länge.

Die Gasströmung durchströmt die Prozesskammer jedenfalls über die gesamte Prozesskammerhöhe. Die Strömungseinrichtung ist sonach eingerichtet, eine Gasströmung zu erzeugen, welche die Prozesskammer über die gesamte Prozesskammerhöhe durchströmt. In Höhenrichtung betrachtet existiert damit kein Prozesskammerbereich, der nicht von der Gasströmung durchströmt wird. Der Einströmbereich erstreckt sich damit typischerweise ebenso über die gesamte Prozesskammerhöhe; dies ist jedoch nicht zwingend erforderlich, da über eine geeignete Ausrichtung der Gasströmung bzw. eines Teils der Gasströmung ebenso erreicht werden kann, dass die Gasströmung die Prozesskammer über die gesamte Prozesskammerhöhe durchströmt.

Die Gasströmung ist zudem in mehrere die Prozesskammer parallel übereinander durchströmende Teilgasströmungen aufgeteilt. Die jeweiligen Teilgasströmungen unterscheiden sich in wenigstens einem die Strömungseigenschaften der jeweiligen Teilgasströmungen betreffenden Strömungsparameter. Bei dem Strömungsparameter handelt es sich insbesondere um die Strömungsgeschwindigkeit. Die Strömungseinrichtung ist sonach eingerichtet, die Gasströmung in mehrere die Prozesskammer parallel übereinander durchströmende Einzel- oder Teilgasströmungen aufzuteilen, welche sich in wenigstens einem die Strömungseigenschaften der jeweiligen Teilgasströmungen betreffenden Strömungsparameter unterscheiden. Die jeweiligen parallel übereinander durch die Prozesskammer strömenden Teilgasströmungen bilden zusammen die die Prozesskammer durchströmende Gasströmung; die Gasströmung umfasst damit durch die unterschiedlichen Teilgasströmungen gebildete, parallel übereinander liegende unterschiedliche Strömungsbereiche, in welchen die Gasströmung mit unterschiedlichen Strömungseigenschaften durch die Prozesskammer strömt.

Die Strömungseinrichtung umfasst sonach typischerweise ein erstes Einströmelement oder eine Gruppe erster Einströmelemente, welche zum Einströmen eines Gases in die Prozesskammer unter bzw. zur Ausbildung einer ersten Teilgasströmung eingerichtet ist bzw. sind, und wenigstens ein weiteres Einströmelement oder wenigstens eine Gruppe weiterer Einströmelemente, welche zum Einströmen eines Gases in die Prozesskammer unter bzw. zur Ausbildung der wenigstens einen weiteren Teilgasströmung eingerichtet ist bzw. sind. Ein jeweiliges Einströmelement umfasst wenigstens eine, insbesondere düsenartige bzw. -förmige, Einströmöffnung. Ein jeweiliges Einströmelement kann zumindest abschnittsweise eine die Strömung beeinflussende Struktur, d. h. z. B. eine Gitter- oder Wabenstruktur, welche durch eine gitter- bzw. wabenartige bzw. -förmige Anordnung und/oder Ausbildung jeweiliger Einströmöffnungen gebildet ist, aufweisen.

An dieser Stelle ist anzumerken, dass der Ausströmbereich wenigstens ein Ausströmelement zum Ausströmen der Prozessgasströmung aus der Prozesskammer umfasst. Ein jeweiliges Ausströmelement umfasst wenigstens eine, gegebenenfalls düsenartige bzw. -förmige, Ausströmöffnung.

Dadurch, dass die Gasströmung die Prozesskammer über die gesamte Prozesskammerhöhe durchströmt und mehrere Teilgasströmungen unterschiedlicher Strömungseigenschaften, d. h. insbesondere unterschiedlicher Strömungsgeschwindigkeit, verwendet werden, wird die Effizienz der Entfernung entsprechender partikulärer Verunreinigungen au der Prozesskammer zu erhöht. Dadurch, dass die Gasströmung die Prozesskammer über die gesamte Prozesskammerhöhe durchströmt und mehrere Teilgasströmungen unterschiedlicher Strömungseigenschaften, d. h. insbesondere unterschiedlicher Strömungsgeschwindigkeit, verwendet werden, werden zudem unerwünschte Verwirbelungen vermieden. Insgesamt liegt damit eine, insbesondere im Hinblick auf die Effizienz der Entfernung prozessbedingt entstehender partikulärer Verunreinigungen aus der Prozesskammer, verbesserte Vorrichtung zur additiven Herstellung dreidimensionaler Objekte vor.

Die Strömungseinrichtung kann insbesondere dazu eingerichtet sein, eine erste Teilgasströmung (untere Teilgasströmung), welche in einem ersten Strömungsbereich zwischen einer unteren Prozesskammerbegrenzung, insbesondere einer der die Prozesskammer bodenseitig begrenzenden Prozesskammerwandung, und einem ersten Höhenabschnitt der Prozesskammer entlang der unteren Prozesskammerbegrenzung, insbesondere entlang der die Prozesskammer bodenseitig begrenzenden Prozesskammerwandung, durch die Prozesskammer strömt, und eine weitere (bzw. zweite) Teilgasströmung (obere Teilgasströmung), welche in einem weiteren Strömungsbereich zwischen dem ersten Höhenabschnitt der Prozesskammer und einer oberen Prozesskammerbegrenzung, insbesondere einer die Prozesskammer deckenseitig begrenzenden Prozesskammerwandung, entlang der oberen Prozesskammerbegrenzung, insbesondere entlang der die Prozesskammer deckenseitig begrenzenden Prozesskammerwandung, durch die Prozesskammer strömt, zu erzeugen. Die Strömungseinrichtung kann sonach eingerichtet sein, die Gasströmung in zwei entsprechende Teilgasströmungen aufzuteilen.

Mithin kann die Gasströmung in (genau) zwei Teilgasströmungen aufgeteilt sein, wobei eine erste Teilgasströmung in einem ersten Strömungsbereich zwischen der unteren Prozesskammerbegrenzung und einem ersten Höhenabschnitt der Prozesskammer entlang der unteren Prozesskammerbegrenzung durch die Prozesskammer strömt, und eine weitere Teilgasströmung in einem weiteren Strömungsbereich zwischen dem ersten Höhenabschnitt der Prozesskammer und der oberen Prozesskammerbegrenzung entlang der oberen Prozesskammerbegrenzung durch die Prozesskammer strömt.

Es ist jedoch auch denkbar, dass die Strömungseinrichtung eingerichtet ist, eine erste Teilgasströmung (untere Teilgasströmung), welche in einem ersten Strömungsbereich zwischen einer unteren Prozesskammerbegrenzung, insbesondere einer die Prozesskammer bodenseitig begrenzenden Prozesskammerwandung, und einem ersten Höhenabschnitt der Prozesskammer entlang der unteren Prozesskammerbegrenzung, insbesondere entlang der die Prozesskammer bodenseitig begrenzenden Prozesskammerwandung, durch die Prozesskammer strömt, eine zweite Teilgasströmung (mittlere Teilgasströmung), welche in einem zweiten Strömungsbereich zwischen dem ersten Höhenabschnitt der Prozesskammer und einem zweiten Höhenabschnitt der Prozesskammer durch die Prozesskammer strömt, und eine dritte Teilgasströmung (obere Teilgasströmung), welche in einem dritten Strömungsbereich zwischen dem zweiten Höhenabschnitt der Prozesskammer und einer oberen Prozesskammerbegrenzung, insbesondere einer die Prozesskammer deckenseitig begrenzenden Prozesskammerwandung, entlang der oberen Prozesskammerbegrenzung, insbesondere entlang der die Prozesskammer deckenseitig begrenzenden Prozesskammerwandung, durch die Prozesskammer strömt, zu erzeugen. Die Strömungseinrichtung kann sonach eingerichtet sein, die Gasströmung in (genau) drei Teilgasströmungen aufzuteilen.

Mithin kann die Gasströmung in drei Teilgasströmungen aufgeteilt sein, wobei eine erste Teilgasströmung in einem ersten Strömungsbereich zwischen einer unteren Prozesskammerbegrenzung und einem ersten Höhenabschnitt der Prozesskammer entlang der unteren Prozesskammerbegrenzung durch die Prozesskammer strömt, eine zweite Teilgasströmung in einem zweiten Strömungsbereich zwischen dem ersten Höhenabschnitt der Prozesskammer und einem zweiten Höhenabschnitt der Prozesskammer durch die Prozesskammer strömt, und eine dritte Teilgasströmung in einem dritten Strömungsbereich zwischen dem zweiten Höhenabschnitt der Prozesskammer und einer oberen Prozesskammerbegrenzung entlang der oberen Prozesskammerbegrenzung durch die Prozesskammer strömt.

Selbstverständlich ist es auch möglich, die Gasströmung in mehr als drei Teilgasströmungen aufzuteilen. Die vorstehenden Ausführungen gelten analog.

In allen Fällen strömt die erste Teilgasströmung unmittelbar oberhalb einer Bauebene der Vorrichtung, in welcher die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt. Die erste Teilgasströmung entfernt damit insbesondere prozessbedingt entstehende Verunreinigungen aus dem Bereich der Bauebene.

Eine weitere Teilgasströmung, d. h. im Fall von zwei Teilgasströmungen die zweite Teilgasströmung und im Fall von drei Teilgasströmungen die dritte Teilgasströmung, strömt unmittelbar entlang einer die Prozesskammer deckenseitig begrenzenden Prozesskammerbegrenzung bzw. -wandung. Die weitere Teilgasströmung strömt dabei typischerweise unmittelbar unterhalb einer Energiestrahleinkopplungseinrichtung, z. B. in Form eines Energiestrahleinkopplungsfensters, welche(s) zum Einkoppeln eines Energie- bzw. Laserstrahls in die Prozesskammer eingerichtet ist. Die weitere Teilgasströmung entfernt damit insbesondere prozessbedingt entstehende Verunreinigungen aus dem Bereich der Energiestrahleinkopplungseinrichtung.

Die erste Teilgasströmung kann eine höhere Strömungsgeschwindigkeit wenigstens als die unmittelbar oberhalb dieser strömende weitere Teilgasströmung aufweisen. Derart ist eine effiziente Entfernung von prozessbedingt entstehenden Verunreinigungen aus dem Bereich der Bauebene sichergestellt.

Die dritte Teilgasströmung, sofern vorhanden, kann eine höhere Strömungsgeschwindigkeit wenigstens als die unmittelbar unterhalb dieser strömende zweite Teilgasströmung aufweisen. Derart ist eine effiziente Entfernung von prozessbedingt entstehenden Verunreinigungen aus dem Bereich der Energiestrahleinkopplungseinrichtung sichergestellt. Im Falle dreier Teilgasströmungen kann sich sonach eine Strömungsgeschwindigkeitsverteilung der Gasströmung ergeben mit einer im Vergleich hohen Strömungsgeschwindigkeit im einer unteren Prozesskammerbegrenzung, insbesondere im Bereich der Bauebene, sowie im Bereich einer oberen Prozesskammerbegrenzung, insbesondere im Bereich der Energiestrahleinkopplungseinrichtung, und einer im Vergleich weniger hohen Strömungsgeschwindigkeit in einem dazwischen liegenden Bereich. Durch die gezielte Erhöhung der Strömungsgeschwindigkeit in den unteren und oberen Strömungsbereichen, kann der dort für die Bauteil- bzw. Prozessqualität besonders relevante negative Einfluss entsprechender prozessbedingt entstehender Verunreinigungen reduziert werden; ein etwaiger negativer Einfluss der Strömungsgeschwindigkeit auf den die Prozesskammer durchsetzenden Energie- bzw. Laserstrahl kann durch eine vergleichsweise geringe Strömungsgeschwindigkeit in dem dazwischen liegenden mittleren Strömungsbereich verhindert werden.

Die Strömungseinrichtung kann zur Erzeugung der sich in wenigstens einem die Strömungseigenschaften der jeweiligen Teilgasströmungen betreffenden Strömungsparameter unterscheidenden Teilgasströmungen wenigstens zwei unterschiedliche Einströmelemente oder wenigstens zwei Gruppen unterschiedlicher Einströmelemente umfassen. Ein erstes Einströmelement oder eine Gruppe erster Einströmelemente ist bzw. sind zur Erzeugung einer ersten Teilgasströmung und wenigstens ein weiteres Einströmelement oder wenigstens eine Gruppe weiterer Einströmelemente ist bzw. sind zur Erzeugung wenigstens einer weiteren Teilgasströmung eingerichtet. Die jeweiligen Einströmelemente können sich z. B. in der die Strömungseigenschaften beeinflussenden Geometrie ihrer jeweiligen Einströmöffnungen unterscheiden.

Die Strömungseinrichtung kann zur Erzeugung der sich in wenigstens einem die Strömungseigenschaften der jeweiligen Teilgasströmungen betreffenden Strömungsparameter unterscheidenden Teilgasströmungen alternativ oder ergänzend wenigstens zwei unterschiedliche, jeweils wenigstens ein Strömungsführungselement, z. B. in Form eines Strömungsleitblechs, umfassende Strömungsführungselementanordnungen umfassen. Eine erste Strömungsführungselementanordnung ist zur Erzeugung einer ersten Teilgasströmung und eine weitere Strömungsführungselementanordnung ist zur Erzeugung einer weiteren Teilgasströmung eingerichtet. Die jeweiligen Strömungsführungselementanordnungen können sich z. B. in der die Strömungseigenschaften beeinflussenden Geometrie ihrer jeweiligen Strömungsführungselemente unterscheiden. Die jeweiligen Strömungsführungselementanordnungen sind den Einströmelementen typischerweise strömungstechnisch vorgeschaltet.

Wie erwähnt, umfasst die Strömungseinrichtung typischerweise ein erstes Einströmelement oder eine Gruppe erster Einströmelemente, welche zum Einströmen eines Gases in die Prozesskammer unter bzw. zur Ausbildung einer ersten Teilgasströmung eingerichtet ist, und wenigstens ein weiteres Einströmelement oder wenigstens eine Gruppe weiterer Einströmelemente, welche zum Einströmen eines Gases in die Prozesskammer unter bzw. zur Ausbildung der wenigstens einen weiteren Teilgasströmung eingerichtet ist.

Das erste Einströmelement oder die Gruppe erster Einströmelemente, welches bzw. welche zur Erzeugung der ersten Teilgasströmung eingerichtet ist bzw. sind, kann bzw. können, insbesondere relativ zu der Bauebene, in welcher die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt, bewegbar gelagert sein. Derart ist es möglich, die erste Teilgasströmung nahe an einen selektiv belichteten bzw. verfestigten Bereich einer Baumaterialschicht zu bewegen, was die Effizienz der Entfernung prozessbedingt entstehender Verunreinigungen erhöht.

Das erste Einströmelement oder die Gruppe erster Einströmelemente kann sonach an oder in einer innerhalb der Prozesskammer, insbesondere relativ zu der Bauebene, in welcher die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt, bewegbar gelagerten Funktionskomponente der Vorrichtung angeordnet oder ausgebildet sein. Konkret kann das erste Einströmelement oder die Gruppe erster Einströmelemente an oder in einer innerhalb der Prozesskammer, insbesondere relativ zu der Bauebene, in welcher die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt, bewegbar gelagerten Funktionskomponente einer Beschichtereinrichtung, insbesondere einem ein, insbesondere klingenartiges bzw. -förmiges, Beschichterelement tragenden Beschichtergrundkörper, welche zur Ausbildung selektiv zu belichtender bzw. zu verfestigender Baumaterialschicht in der Bauebene der Vorrichtung eingerichtet ist, angeordnet oder ausgebildet sein.

Der Ausströmbereich kann, insbesondere im Zentrum, einer die Prozesskammer seitlich begrenzenden, insbesondere konisch, zulaufenden Prozesskammerwandung angeordnet oder ausgebildet sein. Jeweilige Teilgasströmungen können aufgrund der gegebenen Geometrie, insbesondere Konizität, im Bereich des Ausströmbereichs zusammengeführt aus der Prozesskammer ausströmen, was, insbesondere aufgrund einer derart realisierten Sogwirkung, ein effizientes Ausströmen der mit entsprechenden prozessbedingt entstehenden Verunreinigungen angereicherten Gasströmung aus der Prozesskammer ermöglicht.

Die Erfindung ist anhand von Ausführungsbeispielen in den Zeichnungsfiguren näher erläutert. Dabei zeigen:

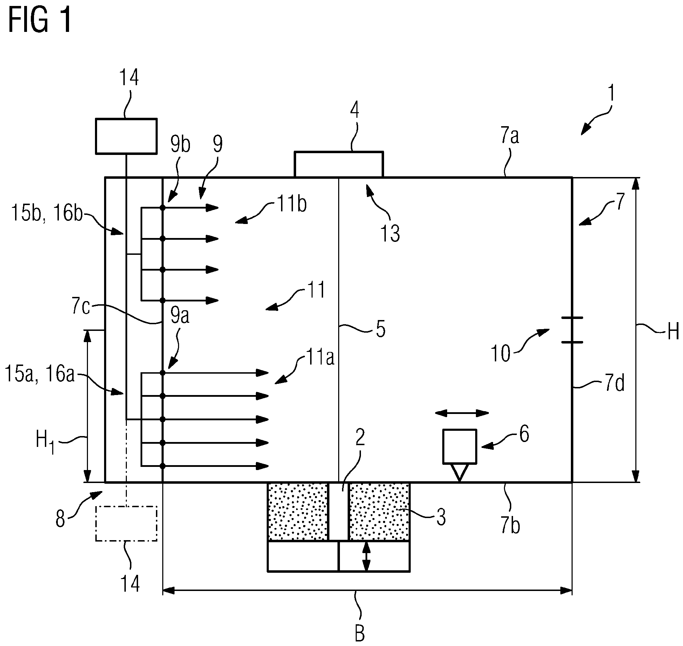

- Fig. 1 - 4: je eine Prinzipdarstellung einer Vorrichtung gemäß einem Ausführungsbeispiel.

Fig. 1 zeigt eine Prinzipdarstellung einer Vorrichtung 1 gemäß einem Ausführungsbeispiel. Dabei ist Fig. 1, wie auch in den übrigen Fig., nur der für die Erläuterung des nachfolgend beschriebenen Prinzips relevante Ausschnitt der Vorrichtung 1 gezeigt.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines von einer Belichtungseinrichtung 4, welche typischerweise eine Laserstrahlerzeugungseinrichtung (nicht gezeigt) und eine Laserstrahlablenk- bzw. Scannereinrichtung (nicht gezeigt) umfasst, erzeugten Laserstrahls 5. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann als Laser-CUSING®-Vorrichtung, d. h. als Vorrichtung zur Durchführung selektiver Laserschmelzverfahren, ausgebildet sein.

Die Vorrichtung 1 umfasst die zur Durchführung additiver Bauvorgänge erforderlichen Funktionskomponenten. Hierzu zählen insbesondere eine Beschichtungseinrichtung 5, welche zur Ausbildung selektiv zu verfestigender Baumaterialschichten in der Bauebene E der Vorrichtung 1 eingerichtet ist, und die bereits erwähnte Belichtungseinrichtung 4, welche zur selektiven Belichtung selektiv zu verfestigender Baumaterialschichten in der Bauebene E der Vorrichtung 1 eingerichtet ist.

Die genannten Funktionskomponenten sind an bzw. in einer inertisierbaren Prozesskammer 7 der Vorrichtung 1 angeordnet bzw. ausgebildet. Die Prozesskammer 7 ist durch Prozesskammerbegrenzungen räumlich-körperlich begrenzt und weist eine durch eine obere und eine untere Prozesskammerbegrenzung definierte Prozesskammerhöhe H auf. Bei der oberen Prozesskammerbegrenzung handelt es sich in dem Ausführungsbeispiel gemäß Fig. 1 um eine die Prozesskammer 7 deckenseitig begrenzende Prozesskammerwandung 7a, bei der unteren Prozesskammerbegrenzung handelt es sich um eine die Prozesskammer 7 bodenseitig begrenzende Prozesskammerwandung 7b.

Die Vorrichtung 1 umfasst weiter eine Strömungseinrichtung 8, welche zur Erzeugung einer die Prozesskammer 7 zwischen einem prozesskammerseitigen Einströmbereich 9 und einem prozesskammerseitigen Ausströmbereich 10 durchströmenden inerten Gasströmung 11 eingerichtet ist. Der Einströmbereich 9 und der Ausströmbereich 10 sind einander gegenüber liegend in die Prozesskammer 7 seitlich begrenzenden Prozesskammerwandungen 7c, 7d angeordnet bzw. ausgebildet. Die Gasströmung 11 durchströmt die Prozesskammer 7 über deren gesamte Breite B.

Ersichtlich durchströmt die Gasströmung 11 die Prozesskammer 7 zudem über die gesamte Prozesskammerhöhe H. Die Strömungseinrichtung 8 ist sonach eingerichtet, eine Gasströmung 11 zu erzeugen, welche die Prozesskammer 7 über die gesamte Prozesskammerhöhe H durchströmt. In Höhenrichtung betrachtet existiert damit kein Prozesskammerbereich, der nicht von der Gasströmung 11 durchströmt wird. Der Einströmbereich 9 erstreckt sich damit, wie in Fig. 1 gezeigt, typischerweise ebenso über die Prozesskammerhöhe H.

Die Strömungseinrichtung 8 ist eingerichtet, die Gasströmung 11 in mehrere die Prozesskammer 7 parallel übereinander durchströmende Teilgasströmungen 11a, 11b aufzuteilen, welche sich in wenigstens einem die Strömungseigenschaften der jeweiligen Teilgasströmungen 11a, 11b betreffenden Strömungsparameter, d. h. in den in den Fig. gezeigten Ausführungsbeispielen beispielhaft der Strömungsgeschwindigkeit, unterscheiden. Die jeweiligen parallel übereinander durch die Prozesskammer 7 strömenden Teilgasströmungen 11a, 11b bilden zusammen die die Prozesskammer 7 durchströmende Gasströmung 11; die Gasströmung 11 umfasst damit durch die unterschiedlichen Teilgasströmungen 11a, 11b gebildete, parallel übereinander liegende unterschiedliche Strömungsbereiche, in welchen die Gasströmung 11 mit unterschiedlichen Strömungseigenschaften durch die Prozesskammer 7 strömt. Die unterschiedlichen Strömungsgeschwindigkeiten der Teilgasströmungen 11a, 11b sind durch die unterschiedlichen langen Pfeile angedeutet.

Die Strömungseinrichtung 8 umfasst eine Gruppe erster Einströmelemente 9a, welche zum Einströmen eines Gases in die Prozesskammer 7 unter bzw. zur Ausbildung einer ersten Teilgasströmung 11a eingerichtet sind, und eine Gruppe weiterer Einströmelemente 9b, welche zum Einströmen eines Gases in die Prozesskammer 7 unter bzw. zur Ausbildung einer zweiten Teilgasströmung 11b eingerichtet sind. Ein jeweiliges Einströmelement 9a, 9b umfasst wenigstens eine, insbesondere düsenartige bzw. -förmige, Einströmöffnung (nicht gezeigt). Ein jeweiliges Einströmelement 9a, 9b kann zumindest abschnittsweise eine die Strömung beeinflussende Struktur, d. h. z. B. eine Gitter- oder Wabenstruktur, welche durch eine gitter- bzw. wabenartige bzw. -förmige Anordnung und/oder Ausbildung jeweiliger Einströmöffnungen gebildet ist, aufweisen.

In dem Ausführungsbeispiel gemäß Fig. 1 ist die Gasströmung 11 in zwei Teilgasströmungen 11a, 11b aufgeteilt. Die erste Teilgasströmung 11a (untere Teilgasströmung) strömt in einem ersten Strömungsbereich zwischen der unteren Prozesskammerwandung 7b und einem ersten Höhenabschnitt H1 der Prozesskammer 7 entlang der unteren Prozesskammerwandung 7b durch die Prozesskammer 7. Die zweite Teilgasströmung 11b (obere Teilgasströmung) strömt in einem zweiten Strömungsbereich zwischen dem ersten Höhenabschnitt H1 der Prozesskammer 7 und der oberen Prozesskammerwandung 7a entlang der oberen Prozesskammerwandung 7a durch die Prozesskammer 7.

Die Strömungseinrichtung 8 ist entsprechend dazu eingerichtet, eine erste Teilgasströmung 11a, welche in einem ersten Strömungsbereich zwischen einer die Prozesskammer 7 bodenseitig begrenzenden Prozesskammerwandung 7b und einem ersten Höhenabschnitt H1 der Prozesskammer 7 entlang der die Prozesskammer 7 bodenseitig begrenzenden Prozesskammerwandung 7b durch die Prozesskammer 7 strömt, und eine zweite Teilgasströmung 11b, welche in einem zweiten Strömungsbereich zwischen dem ersten Höhenabschnitt H1 der Prozesskammer 7 und der die Prozesskammer 7 deckenseitig begrenzenden Prozesskammerwandung 7a entlang der die Prozesskammer 7 deckenseitig begrenzenden Prozesskammerwandung 7a durch die Prozesskammer 7 strömt, zu erzeugen. Die Strömungseinrichtung 8 ist sonach eingerichtet, die Gasströmung 11 in zwei entsprechende Teilgasströmungen 11a, 11b aufzuteilen.

Die erste Teilgasströmung 11a strömt unmittelbar oberhalb der Bauebene E der Vorrichtung 1. Die erste Teilgasströmung 11a entfernt damit insbesondere prozessbedingt entstehende Verunreinigungen aus dem Bereich der Bauebene E. Anhand der Länge der Pfeile ist ersichtlich, dass die erste Teilgasströmung 11a eine höhere Strömungsgeschwindigkeit als die unmittelbar oberhalb dieser strömende zweite Teilgasströmung 11b aufweist. Derart ist eine effiziente Entfernung von prozessbedingt entstehenden Verunreinigungen aus dem Bereich der Bauebene E sichergestellt.

Die zweite Teilgasströmung 11b strömt unmittelbar entlang der die Prozesskammer 7 deckenseitig begrenzenden Prozesskammerwandung 7a. Die zweite Teilgasströmung 11b strömt dabei unmittelbar unterhalb einer Energiestrahleinkopplungseinrichtung 13, z. B. in Form eines Energiestrahleinkopplungsfensters, welche(s) zum Einkoppeln des Laserstrahls 5 in die Prozesskammer 7 eingerichtet ist. Die zweite Teilgasströmung 11b entfernt damit insbesondere prozessbedingt entstehende Verunreinigungen aus dem Bereich der Energiestrahleinkopplungseinrichtung 13.

Die Strömungseinrichtung 8 umfasst zur Erzeugung der Teilgasströmungen 11a, 11b zwei Gruppen unterschiedlicher Einströmelemente 9a, 9b. Eine Gruppe erster Einströmelemente 9a ist zur Erzeugung der ersten Teilgasströmung 11a und eine Gruppe weiterer Einströmelemente 9b ist zur Erzeugung der zweiten Teilgasströmung 11b eingerichtet. Die jeweiligen Einströmelemente 9a, 9b unterscheiden sich in der die Strömungseigenschaften beeinflussenden Geometrie ihrer jeweiligen Einströmöffnungen, woraus das beschriebene Strömungsgeschwindigkeitsprofil der Gasströmung 11 resultiert.

In Fig. 1 ist durch eine optionale zweite Strömungserzeugungseinrichtung 14 angedeutet, dass die Strömungseinrichtung 8 zur Erzeugung der Teilgasströmungen 11a, 11b (auch) zwei unterschiedliche Strömungserzeugungseinrichtungen 14, insbesondere Saug- oder Gebläseeinrichtungen, umfassen kann (nicht erfindungsgemäßes Ausführungsbeispiel). Eine erste Strömungserzeugungseinrichtung 14 ist zur Erzeugung einer ersten Teilgasströmung 11a eingerichtet, eine zweite Strömungserzeugungseinrichtung 14 ist zur Erzeugung der zweiten Teilgasströmung 11b eingerichtet. Die erste Strömungserzeugungseinrichtung 14 ist der Gruppe erster Einströmelemente 9a zugeordnet, die zweite Strömungserzeugungseinrichtung 14 ist der Gruppe zweiter Einströmelemente 9b zugeordnet. Die jeweiligen Strömungserzeugungseinrichtungen 14 können sich z. B. in ihren Leistungsaufnahmen unterscheiden, sodass diese Teilgasströmungen 11a, 11b unterschiedlicher Strömungseigenschaften erzeugen können, woraus das beschriebene Strömungsgeschwindigkeitsprofil der Gasströmung 11 resultiert.

Die Strömungseinrichtung 8 kann zur Erzeugung der Teilgasströmungen 11a, 11b angeordnet oder ergänzend zwei unterschiedliche, jeweils wenigstens ein Strömungsführungselement 15a, 15b, z. B. in Form eines Strömungsleitblechs, umfassende Strömungsführungselementanordnungen 16a, 16b umfassen. Die jeweiligen Strömungsführungselementanordnungen 16a, 16b sind den Einströmelementen 9a, 9b strömungstechnisch vorgeschaltet. Eine erste Strömungsführungselementanordnung 16a ist zur Erzeugung der ersten Teilgasströmung 11a und eine zweite Strömungsführungselementanordnung 16 ist zur Erzeugung der zweiten Teilgasströmung 11b eingerichtet. Die jeweiligen Strömungsführungselementanordnungen 16a, 16b können sich z. B. in der die Strömungseigenschaften beeinflussenden Geometrie ihrer jeweiligen Strömungsführungselemente 15a, 15b unterscheiden, woraus das beschriebene Strömungsgeschwindigkeitsprofil der Gasströmung 11 resultiert.

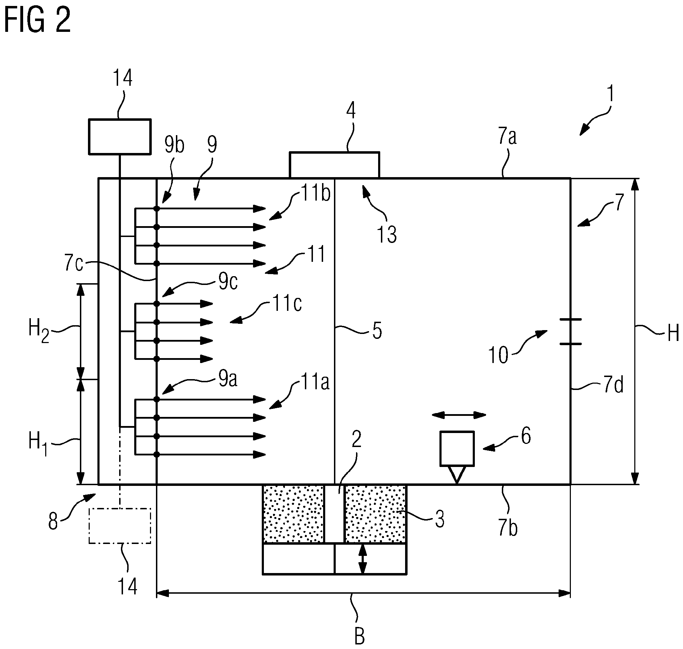

Fig. 2 zeigt eine Prinzipdarstellung einer Vorrichtung 1 gemäß einem weiteren Ausführungsbeispiel.

Anhand von Fig. 2 ist ersichtlich, dass die Gasströmung 11 in drei Teilgasströmungen 11a - 11c aufgeteilt sein kann, wobei eine erste Teilgasströmung 11a in einem ersten Strömungsbereich zwischen einer unteren Prozesskammerbegrenzung, d. h. der die Prozesskammer 7 bodenseitig begrenzenden Prozesskammerwandung 7b, und einem ersten Höhenabschnitt H1 der Prozesskammer 7 entlang der unteren Prozesskammerbegrenzung durch die Prozesskammer 7 strömt, eine zweite Teilgasströmung 11c in einem zweiten Strömungsbereich zwischen dem ersten Höhenabschnitt H1 der Prozesskammer 7 und einem zweiten Höhenabschnitt H2 der Prozesskammer 7 durch die Prozesskammer 7 strömt, und eine dritte Teilgasströmung 11b in einem dritten Strömungsbereich zwischen dem zweiten Höhenabschnitt H2 der Prozesskammer 7 und einer oberen Prozesskammerbegrenzung, d. h. der die Prozesskammer 7 deckenseitig begrenzenden Prozesskammerwandung 7a, entlang der oberen Prozesskammerbegrenzung durch die Prozesskammer 7 strömt.

Die Strömungseinrichtung 8 ist hier eingerichtet, eine erste Teilgasströmung 11a (untere Teilgasströmung), welche in einem ersten Strömungsbereich zwischen der die Prozesskammer 7 bodenseitig begrenzenden Prozesskammerwandung 7b und dem ersten Höhenabschnitt H1 der Prozesskammer 7 entlang der die Prozesskammer 7 bodenseitig begrenzenden Prozesskammerwandung 7b durch die Prozesskammer strömt, eine zweite Teilgasströmung 11c (mittlere Teilgasströmung), welche in einem zweiten Strömungsbereich zwischen dem ersten Höhenabschnitt H1 der Prozesskammer 7 und einem zweiten Höhenabschnitt H2 der Prozesskammer 7 durch die Prozesskammer 7 strömt, und eine dritte Teilgasströmung 11b (obere Teilgasströmung), welche in einem dritten Strömungsbereich zwischen dem zweiten Höhenabschnitt H2 der Prozesskammer 7 und der die Prozesskammer 7 deckenseitig begrenzenden Prozesskammerwandung 7a entlang der die Prozesskammer 7 deckenseitig begrenzenden Prozesskammerwandung 7a durch die Prozesskammer 7 strömt, zu erzeugen. Die Strömungseinrichtung 8 ist sonach eingerichtet, die Gasströmung 11 in drei Teilgasströmungen 11a - 11c aufzuteilen.

Die untere Teilgasströmung 11a strömt wiederum unmittelbar oberhalb der Bauebene E der Vorrichtung 1. Die untere Teilgasströmung 11a entfernt damit insbesondere prozessbedingt entstehende Verunreinigungen aus dem Bereich der Bauebene E. Anhand der Länge der Pfeile ist ersichtlich, dass die untere Teilgasströmung 11a eine höhere Strömungsgeschwindigkeit als die unmittelbar oberhalb dieser strömende mittlere Teilgasströmung 11c aufweist. Derart ist eine effiziente Entfernung von prozessbedingt entstehenden Verunreinigungen aus dem Bereich der Bauebene E sichergestellt.

Die obere Teilgasströmung 11b strömt wiederum unmittelbar entlang der die Prozesskammer 7 deckenseitig begrenzenden Prozesskammerwandung 7a. Die obere Teilgasströmung 11b strömt dabei unmittelbar unterhalb der Energiestrahleinkopplungseinrichtung 13. Die obere Teilgasströmung 11b entfernt damit insbesondere prozessbedingt entstehende Verunreinigungen aus dem Bereich der Energiestrahleinkopplungseinrichtung 13. Anhand der Länge der Pfeile ist ersichtlich, dass auch die obere Teilgasströmung 11b eine höhere Strömungsgeschwindigkeit als die unmittelbar unterhalb dieser strömende mittlere Teilgasströmung 11c aufweist. Derart ist eine effiziente Entfernung von prozessbedingt entstehenden Verunreinigungen aus dem Bereich der Energiestrahleinkopplungseinrichtung 13 sichergestellt. Durch die gezielte Erhöhung der Strömungsgeschwindigkeit in den oberen und unteren Strömungsbereichen kann der dort für die Bauteil- bzw. Prozessqualität besonders relevante negative Einfluss entsprechender prozessbedingt entstehender Verunreinigungen reduziert werden; ein etwaiger negativer Einfluss der Strömungsgeschwindigkeit auf den Laserstrahl 5 kann durch eine vergleichsweise geringe Strömungsgeschwindigkeit in dem dazwischen liegenden mittleren Strömungsbereich verhindert werden.

Selbstverständlich ist es auch möglich, die Gasströmung 11 in mehr als drei Teilgasströmungen aufzuteilen. Die vorstehenden Ausführungen gelten analog.

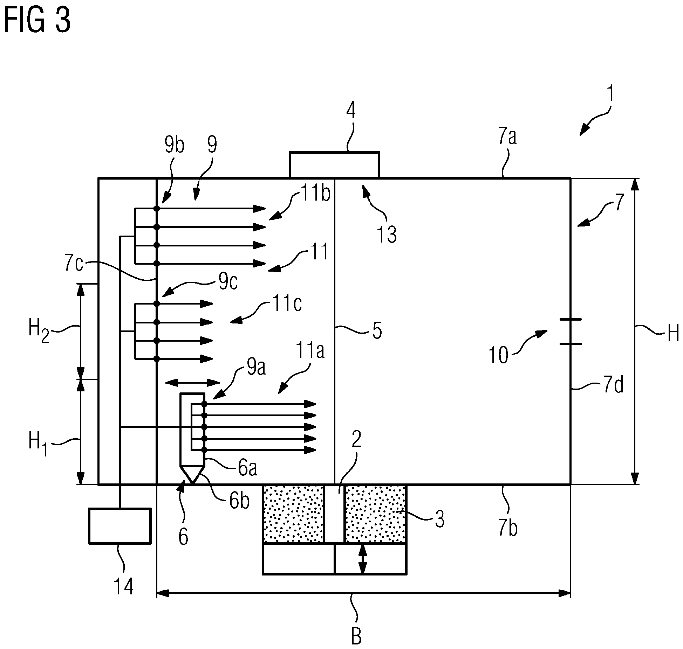

Fig. 3 zeigt eine Prinzipdarstellung einer Vorrichtung 1 gemäß einem weiteren Ausführungsbeispiel.

Anhand von Fig. 3 ist ersichtlich, dass die Gruppe erster Einströmelemente 9a, welche zur Erzeugung der ersten Teilgasströmung 11a eingerichtet sind, relativ zu der Bauebene E bewegbar gelagert sein können. Derart ist es möglich, die erste Teilgasströmung 11a nahe an einen selektiv belichteten bzw. verfestigten Bereich einer Baumaterialschicht zu bewegen, was die Effizienz der Entfernung prozessbedingt entstehender Verunreinigungen erhöht.

Die Gruppe erster Einströmelemente 11a ist an oder in einer innerhalb der Prozesskammer 7 relativ zu der Bauebene E gelagerten Funktionskomponente der Vorrichtung 1 angeordnet oder ausgebildet. Konkret ist die Gruppe erster Einströmelemente 9a in dem Ausführungsbeispiel gemäß Fig. 3 an oder in einer innerhalb der Prozesskammer 7 relativ zu der Bauebene E gelagerten Funktionskomponente der Beschichtereinrichtung 6, d. h. an bzw. in einem ein, insbesondere klingenartiges bzw. -förmiges, Beschichterelement 6b tragenden Beschichtergrundkörper 6a, angeordnet bzw. ausgebildet.

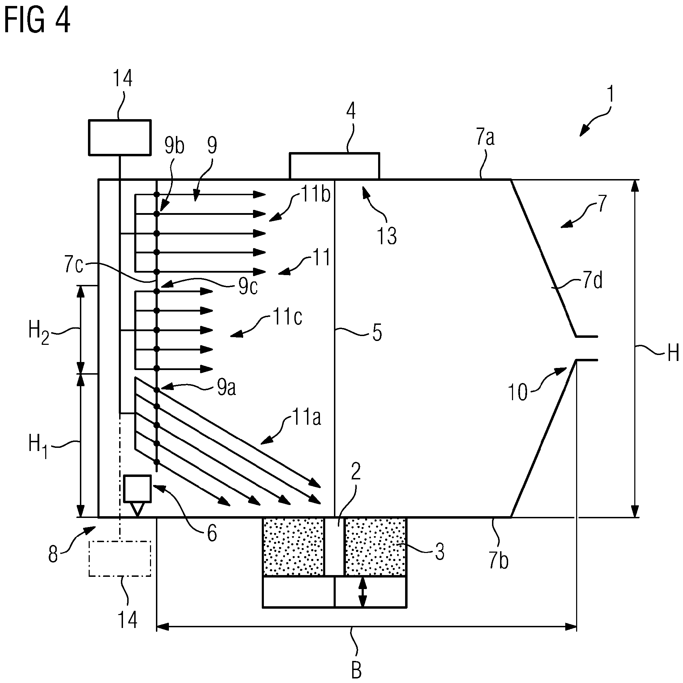

Fig. 4 zeigt eine Prinzipdarstellung einer Vorrichtung 1 gemäß einem weiteren Ausführungsbeispiel.

Anhand von Fig. 4 ist ersichtlich, dass es sich bei einer unteren Prozesskammerbegrenzung auch um eine Oberfläche bzw. -seite einer wenigstens ein Pulvermodul 17, insbesondere ein Baumodul, in dessen Pulveraufnahmeraum (Bauraum) die eigentliche additive Herstellung dreidimensionaler Objekte 2 erfolgt, umfassenden Pulvermodulmodulbaugruppe 18 handeln kann. Die Pulvermodulbaugruppe 18 ist über rein schematisch dargestellte pulvermodulbaugruppenseitige (mechanische) Andockschnittstellen 19 an ebenso rein schematisch dargestellte prozesskammerseitige (mechanische) Andockschnittstellen 20 an die Prozesskammer 7 seitlich begrenzende Prozesskammerwandungen 7c, 7d andockbar. Die prozesskammerseitigen (mechanischen) Andockschnittstellen 20 bilden einen prozesskammerseitigen Andockbereich (nicht näher bezeichnet).

Anhand von Fig. 4 ist ferner ersichtlich, dass es nicht zwingend nötig ist, dass sich der Einströmbereich 9 über die gesamte Prozesskammerhöhe H erstreckt, da über eine geeignete Ausrichtung der Gasströmung 11 bzw. einer Teilgasströmung 11a - 11c ebenso erreicht werden kann, dass die Gasströmung 11 die Prozesskammer 7 über die gesamte Prozesskammerhöhe H durchströmt. Ersichtlich sind die ersten Einströmelemente 9a mit einem gewissen (vertikalen) Abstand oberhalb der die Prozesskammer 7 bodenseitig begrenzenden unteren Prozesskammerbegrenzung angeordnet. Einzelne, mehrere oder sämtliche erste Einströmelemente 9a sind derart ausgerichtet, dass die erste Teilgasströmung 11 zunächst schräg in Richtung der Prozesskammerwandung 7b und sodann entlang dieser (über die Bauebene E) strömt. Durch den Abstand zwischen den ersten Einströmelementen 9a und der unteren Prozesskammerbegrenzung ist ein Freiraum gebildet, in welchen die Beschichtereinrichtung 6 bewegt werden kann.

Fig. 4 zeigt schließlich, dass der Ausströmbereich 10 im Zentrum einer die Prozesskammer 7 seitlich begrenzenden konisch zulaufenden Prozesskammerwandung 7d angeordnet bzw. ausgebildet sein kann. Jeweilige Teilgasströmungen 11a - 11c können aufgrund der gegebenen Geometrie, d. h. insbesondere der Konizität, der Prozesskammerwandung 7a im Bereich des Ausströmbereichs 10 zusammengeführt aus der Prozesskammer 7 ausströmen.

Selbstverständlich können sämtliche der mit Bezug auf die einzelnen Ausführungsbeispiele gezeigten Merkmale der Vorrichtung 1 miteinander kombiniert werden.

## Patentansprüche

1. Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls verfestigbaren Baumaterial (3) in einer vorrichtungsseitigen Prozesskammer (7) mit definierten Prozesskammerhöhe (H) aufweist, umfassend eine Strömungseinrichtung (8), welche zur Erzeugung einer die Prozesskammer (7) zwischen einem Einströmbereich (9) und einem Ausströmbereich (10) durchströmenden, insbesondere inerten, Gasströmung (11) eingerichtet ist, wobei die Strömungseinrichtung (8) eine Strömungserzeugungseinrichtung (14) zur Erzeugung der Gasströmung (11) umfasst, wobei die Gasströmung (11) die Prozesskammer (7) über die gesamte Prozesskammerhöhe (H) durchströmt, **dadurch gekennzeichnet, dass** die Gasströmung (11) in mehrere die Prozesskammer (7) parallel übereinander durchströmende Teilgasströmungen (11a - 11c), welche sich in wenigstens einem die Strömungseigenschaften der jeweiligen Teilgasströmungen (11a- 11c) betreffenden Strömungsparameter unterscheiden, aufgeteilt ist, wobei die Strömungseinrichtung (8) zur Erzeugung der sich in wenigstens einem die Strömungseigenschaften der jeweiligen Teilgasströmungen (11a - 11c) betreffenden Strömungsparameter unterscheidenden Teilgasströmungen (11a - 11c)
wenigstens zwei unterschiedliche Einströmelemente (9a - 9c) oder wenigstens zwei Gruppen unterschiedlicher Einströmelemente (9a - 9 c) umfasst, wobei ein erstes Einströmelement (9a) oder eine Gruppe erster Einströmelemente (9a) zur Erzeugung einer ersten Teilgasströmung (11a) und wenigstens ein weiteres Einströmelement (9b, 9c) oder wenigstens eine Gruppe weiterer Einströmelemente (9b, 9c) zur Erzeugung wenigstens einer weiteren Teilgasströmung (11b, 11c) eingerichtet ist; und/oder
wenigstens zwei unterschiedliche, jeweils wenigstens ein Strömungsführungselement (15a, 15b) umfassende Strömungsführungselementanordnungen (16a, 16b) umfasst, wobei eine erste Strömungsführungselementanordnung (16a) zur Erzeugung einer ersten Teilgasströmung (11a) und eine weitere Strömungsführungselementanordnung (16b) zur Erzeugung einer weiteren Teilgasströmung (11b) eingerichtet ist.

2. Vorrichtung nach Anspruch 1, **dadurch gekennzeichnet, dass** die Gasströmung (11) in zwei Teilgasströmungen (11a, 11b) aufgeteilt ist, wobei
eine erste Teilgasströmung (11a) in einem ersten Strömungsbereich zwischen einer unteren Prozesskammerbegrenzung und einem ersten Höhenabschnitt (H1) der Prozesskammer (7) entlang der unteren Prozesskammerbegrenzung durch die Prozesskammer (7) strömt, und wenigstens eine weitere Teilgasströmung (11b) in einem weiteren Strömungsbereich zwischen dem ersten Höhenabschnitt (H1) der Prozesskammer (7) und einer oberen Prozesskammerbegrenzung (H2) entlang der oberen Prozesskammerbegrenzung durch die Prozesskammer (7) strömt.

3. Vorrichtung nach Anspruch 1, **dadurch gekennzeichnet, dass** die Gasströmung (11) in drei Teilgasströmungen (11a - 11c) aufgeteilt ist, wobei
eine erste Teilgasströmung (11a) in einem ersten Strömungsbereich zwischen einer unteren Prozesskammerbegrenzung und einem ersten Höhenabschnitt (H1) der Prozesskammer (7) entlang der unteren Prozesskammerbegrenzung durch die Prozesskammer (7) strömt,
eine zweite Teilgasströmung (11c) in einem zweiten Strömungsbereich zwischen dem ersten Höhenabschnitt (H1) der Prozesskammer (7) und einem zweiten Höhenabschnitt (H2) der Prozesskammer (7) durch die Prozesskammer (7) strömt, und
eine dritte Teilgasströmung (11b) in einem dritten Strömungsbereich zwischen dem zweiten Höhenabschnitt (H2) der Prozesskammer (7) und einer oberen Prozesskammerbegrenzung entlang der oberen Prozesskammerbegrenzung durch die Prozesskammer (7) strömt.

4. Vorrichtung nach Anspruch 2 oder 3, **dadurch gekennzeichnet, dass** die erste Teilgasströmung (11a) eine höhere Strömungsgeschwindigkeit wenigstens als die unmittelbar oberhalb dieser strömende weitere Teilgasströmung (11b, 11c) aufweist.

5. Vorrichtung nach Anspruch 3, **dadurch gekennzeichnet, dass** die dritte Teilgasströmung (11b) eine höhere Strömungsgeschwindigkeit wenigstens als die unmittelbar unterhalb dieser strömende zweite Teilgasströmung (11c) aufweist.

6. Vorrichtung nach einem der vorhergehenden Ansprüche, **dadurch gekennzeichnet, dass** das erste Einströmelement (9a) oder die Gruppe erster Einströmelemente (9a), zum Einströmen eines Gases in die Prozesskammer (7) unter bzw. zur Ausbildung einer ersten Teilgasströmung (11a) eingerichtet ist, und das wenigstens eine weitere Einströmelement (9b, 9c) oder die wenigstens eine Gruppe weiterer Einströmelemente (9b, 9c) zum Einströmen eines Gases in die Prozesskammer (7) unter bzw. zur Ausbildung der wenigstens einen weiteren Teilgasströmung (11b, 11c) eingerichtet ist.

7. Vorrichtung nach Anspruch 6 und einem der Ansprüche 2 bis 5, **dadurch gekennzeichnet, dass** das erste Einströmelement (9a) oder die Gruppe erster Einströmelemente (9a), welches bzw. welche zur Erzeugung der ersten Teilgasströmung (11a) eingerichtet ist bzw. sind, insbesondere relativ zu der Bauebene (E), in welcher die sukzessive schichtweise selektive Belichtung und die damit einhergehende sukzessive schichtweise selektive Verfestigung von Baumaterialschichten aus dem vermittels eines Energiestrahls verfestigbaren Baumaterial (3) erfolgt, bewegbar gelagert ist.

8. Vorrichtung nach Anspruch 7, **dadurch gekennzeichnet, dass** das erste Einströmelement (9a) oder die Gruppe erster Einströmelemente (9a) an oder in einer innerhalb der Prozesskammer (7), insbesondere relativ zu der Bauebene (E) der Vorrichtung (1), in welcher die sukzessive schichtweise selektive Belichtung und die damit einhergehende sukzessive schichtweise selektive Verfestigung von Baumaterialschichten aus dem vermittels eines Energiestrahls verfestigbaren Baumaterial (3) erfolgt, bewegbar gelagerten Funktionskomponente einer Beschichtereinrichtung (6), insbesondere einem ein, insbesondere klingenartiges bzw. -förmiges, Beschichterelement (6b) tragenden Beschichtergrundkörper (6a), welche zur Ausbildung selektiv zu belichtender bzw. zu verfestigender Baumaterialschicht in der Bauebene (E) eingerichtet ist, angeordnet oder ausgebildet ist bzw. sind.

9. Vorrichtung nach einem der vorhergehenden Ansprüche, **dadurch gekennzeichnet, dass** der Ausströmbereich (10), insbesondere im Zentrum, einer die Prozesskammer (7) seitlich begrenzenden, insbesondere konisch, zulaufenden Prozesskammerwandung (7d) angeordnet oder ausgebildet ist.

## Claims

1. Apparatus (1) for the additive manufacturing of three-dimensional objects (2) by successive, selective layer-by-layer exposure and thereby successive, selective layer-by-layer compacting of building material layers, consisting of building material (3) compactable by means of an energy beam in a process chamber (7) on the apparatus side, having a defined process chamber height (H), comprising a flow unit (8), which is configured to generate a gas flow (11), in particular an inert gas flow, flowing through the process chamber (7) between an inflow area (9) and an outflow area (10), wherein the flow unit (8) comprises a flow generating device (14) for generating the gas flow (11), wherein the gas flow (11) flows through the process chamber (7) through the entire process chamber height (H), **characterized in that** the gas flow (11) is divided into several partial gas flows (11a-11c), flowing through the process chamber (7) in parallel on top of each other, which differ from each other in at least one flow parameter relating to the flow characteristics of the respective partial flows (11a-11c), wherein the flow unit (8), for generating the partial flows (11a-11c), which differ from each other in at least one of the flow parameters relating to the flow characteristics of the respective partial gas flows (hall),
comprises at least two different inflow elements (9a-9c) or at least two groups of different inflow elements (9a-9c), wherein a first inflow element (9a) or a group of first inflow elements (9a) is arranged to generate a first partial gas flow (11a) and at least one further inflow element (9b, 9c) or at least one group of further inflow elements (9b, 9c) to generate at least one further partial gas flow (11b, 11c); and/or
comprising at least two different flow guide element assemblies (16a, 16b), which comprise two different, whereas at least one flow guide element (15a, 15b),
wherein a first flow guide element assembly (16a) is provided to generate a first partial gas flow (11a) and another flow guide element assembly (16b) is provided to generate a further partial gas flow (11b).

2. Apparatus according to claim 1, **characterized in that** the gas flow (11) is divided into two partial gas flows (11a, 11b), wherein
a first partial gas flow (11a) flows through the process chamber (7) in a first flow area between a lower process chamber boundary and a first height section (H1) of the process chamber (7) along the lower process chamber boundary and at least one further partial gas flow (11a) flows through the process chamber (7) in an additional flow area between the first height section (H1) of the process chamber (7) and an upper process chamber boundary (H2), along the upper process chamber boundary.

3. Apparatus according to claim 1, **characterized in that** the gas flow (11) is divided into three partial gas flows (11a-11c), wherein
a first partial gas flow (11a) flows through the process chamber (7) in a first flow area between a lower process chamber boundary and a first height section (H1) of the process chamber (7) along the lower process chamber boundary and a second partial gas flow (11c) flows through the process chamber (7) in a second flow area between the first height section (H1) of the process chamber (7) and the second height section (H2) of the process chamber (7), and
a third partial gas flow (11b) flows through the process chamber (7) in a third flow area between the second height section (H2) of the process chamber (7) and an upper process chamber boundary along the upper process chamber boundary.

4. Apparatus according to claim 2 or claim 3, **characterized in that** the first partial gas flow (11a) has at least a higher flow speed than the further partial gas flow (11b, 11c) flowing directly above it.

5. Apparatus according to claim 3, **characterized in that** the first partial gas flow (11b) has at least a higher flow speed than the second partial gas flow (11c) flowing directly below it.

6. Apparatus according to one of the foregoing claims, **characterized in that** the first inflow element (9a) or a group of first inflow elements (9a) for the inflow of a gas into the process chamber (7) is arranged with or for formation of a first partial gas flow (11a) and the at least one further inflow element (9a, 9c) or the at least one group of further inflow elements (9b, 9c) is arranged for the inflow of a gas into the process chamber (7) with or for formation of the at least one further partial gas flow (11b, 11c).

7. Apparatus according to claim 6 and one of the claims 2 to 5, **characterized in that** the first inflow element (9a) or a group of first inflow elements (9a) is arranged to be movable and provided for the generation of the first partial gas flow (11a), in particular relative to the building plane (E) in which the selective layer-by-layer exposure and the related selective layer-by-layer solidification of building material layers takes place of the building material (3) that is compactable by means of an energy beam.

8. Apparatus according to claim 7, **characterized in that** the first inflow element (9a) or the group of first inflow elements (9a) is or are arranged on or embodied in a functional component of a radiation device (6), in particular a coating base body (6a) carrying a blade-type or blade-shaped coating element (6b), which is provided for the formation of a building material layer to be selectively exposed or solidified on the building pane (E) and which is arranged to be movable within the process chamber (7), in particular movable relative to the building pane (E) of the apparatus (1), in which the gradual selective layer-by-layer exposure and the related gradual selective layer-by-layer solidification of building material layers of the building material (3) that is compactable by means of an energy beam takes place.

9. Apparatus according to one of the foregoing claims, **characterized in that** the outflow area (10), in particular in the center, is arranged or embodied in a process chamber wall (7d), which is limiting the process chamber (7) on the side and which is, in particular, tapered conically.

## Revendications

1. Dispositif (1) de fabrication additive d'objets tridimensionnels (2) par éclairage successif sélectif couche par couche et ainsi conformément solidification sélective successive de couches de matériau de construction constitué d'un matériau de construction (3) solidifiable au moyen d'un rayon d'énergie dans une chambre de procédé du côté du dispositif (7) présentant une hauteur de chambre de procédé définie (H), comprenant un dispositif d'écoulement (8), conçu pour créer un flux de gaz (11), en particulier inerte, traversant la chambre de procédé (7) entre une zone d'entrée d'écoulement (9) et une zone de sortie d'écoulement (10), le dispositif d'écoulement (8) comprenant un dispositif de création d'écoulement (14) pour créer l'écoulement de gaz (11), l'écoulement de gaz (11) traversant la chambre de procédé (7) sur toute la hauteur de chambre de procédé (H), **caractérisé en ce que** l'écoulement de gaz (11) est réparti en plusieurs écoulements partiels de gaz traversant la chambre de procédé (7) parallèlement les uns des autres (11a - 11c), qui se distinguent par au moins un paramètre d'écoulement concernant les propriétés des écoulements partiels de gaz respectifs (11a - 11c), le dispositif d'écoulement (8) conçu pour créer les écoulements partiels de gaz qui se distinguent par au moins un paramètre d'écoulement concernant les propriétés des écoulements partiels de gaz respectifs (11a - 11c) comprenant au moins deux éléments d'écoulement entrants différents (9a - 9c) ou au moins deux groupes d'écoulement entrants différents (9a - 9c), où un premier élément d'écoulement entrant (9a) ou un groupe de premiers éléments d'écoulement différents (9a) pour créer un premier écoulement partiel de gaz (11a) et au moins un autre élément d'écoulement entrant (9b, 9c) ou au moins un groupe d'autres éléments d'écoulement entrants (9b, 9c) et conçu pour créer au moins un autre écoulement partiel de gaz (11b, 11c) ; et/ou
comprenant au moins deux différents dispositifs d'éléments guides d'écoulement (16a, 16b), comprenant respectivement au moins un élément guide d'écoulement (15a, 15b), un premier dispositif d'éléments guides d'écoulement (16a) étant conçu pour créer un premier écoulement partiel de gaz (11a) et un autre dispositif d'éléments guides d'écoulement (16b) étant conçu pour créer un autre écoulement partiel de gaz (11b).

2. Dispositif selon la revendication 1, **caractérisé en ce que** l'écoulement de gaz (11) est réparti en deux écoulements partiels de gaz (11a, 11b), où un premier écoulement partiel de gaz (11a) s'écoule dans une première zone d'écoulement entre une délimitation inférieure de chambre de procédé et une première section de hauteur (H1) de la chambre de procédé (7) le long de la délimitation inférieure de chambre de procédé à travers la chambre de procédé (7), et au moins un autre écoulement partiel de gaz (11b) s'écoule dans une autre zone d'écoulement entre la première section de hauteur (H1) de la chambre de procédé (7) et une délimitation supérieure de chambre de procédé (H2) le long de la délimitation supérieure de chambre de procédé à travers la chambre de procédé (7).

3. Dispositif selon la revendication 1, **caractérisé en ce que** l'écoulement de gaz (11) est réparti en trois écoulements partiels de gaz (11a - 11c), où un premier écoulement partiel de gaz (11a) s'écoule dans une première zone d'écoulement entre une délimitation inférieure de chambre de procédé et une première section de hauteur (H1) de la chambre de procédé (7) le long de la délimitation inférieure de chambre de procédé à travers la chambre de procédé (7), un deuxième écoulement partiel de gaz (11c) s'écoule dans une deuxième zone d'écoulement entre la première section de hauteur (H1) de la chambre de procédé (7) et une deuxième section de hauteur (H2) de la chambre de procédé (7) à travers la chambre de procédé (7), et
un troisième écoulement partiel de gaz (11b) s'écoule dans une troisième zone d'écoulement entre la deuxième section de hauteur (H2) de la chambre de procédé (7) et une délimitation supérieure de la chambre de procédé le long de la
délimitation supérieure de la chambre de procédé à travers la chambre de procédé (7).

4. Dispositif selon la revendication 2 ou 3, **caractérisé en ce que** le premier écoulement partiel de gaz (11a) présente une plus grande vitesse d'écoulement qu'au moins l'autre écoulement partiel de gaz immédiatement au-dessus de lui (11b, 11c).

5. Dispositif selon la revendication 3, **caractérisé en ce que** le troisième écoulement partiel de gaz (11b) présente une plus grande vitesse d'écoulement qu'au moins le deuxième écoulement partiel de gaz immédiatement au-dessous de lui (11c).

6. Dispositifs selon l'une quelconque des revendications précédentes, **caractérisé en ce que** le premier élément d'écoulement entrant (9a) ou le groupe des premiers éléments d'écoulement entrants (9a) est conçu pour faire entrer un gaz dans la chambre de procédé (7) sous ou resp. pour former un premier écoulement partiel de gaz (11a), et l'au moins un autre élément d'écoulement entrant (9b, 9c) ou l'au moins un groupe d'autres éléments d'écoulement entrants (9b, 9c) est conçu pour faire entrer un gaz dans la chambre de procédé (7) sous ou resp. pour former l'au moins un autre écoulement partiel de gaz (11b, 11c).

7. Dispositif selon la revendication 6 et une des revendications 2 à 5, **caractérisé en ce que** le premier élément d'écoulement entrant (9a) ou le groupe de premiers éléments d'écoulement entrants (9a), qui est conçu pour créer le premier écoulement partiel de gaz (11a), est disposé de façon mobile, en particulier par rapport au niveau de construction (E) où se produit l'éclairage successif sélectif couche par couche et ainsi conformément la solidification sélective successive de couches de matériau de construction constitué d'un matériau de construction (3) solidifiable au moyen d'un rayon d'énergie.

8. Dispositif selon la revendication 7, **caractérisé en ce que** le premier élément d'écoulement entrant (9a) ou le groupe des premiers éléments d'écoulement entrants (9a) est disposé ou constitué contre ou dans un composant disposé de façon mobile à l'intérieur de la chambre de procédé (7), en particulier par rapport au niveau de construction (E) du dispositif (1) dans lequel se produit l'éclairage successif sélectif couche par couche et ainsi conformément la solidification sélective successive de couches de matériau de construction constitué d'un matériau de construction (3) solidifiable au moyen d'un rayon d'énergie, d'un dispositif de revêtement (6), en particulier dans ou contre un corps de base (6a) de type ou en forme de lame portant un élément de revêtement (6b), conçu pour former une couche de matériau de construction à éclaire ou resp. à solidifier sélectivement au niveau de construction (E).

9. Dispositifs selon l'une quelconque des revendications précédentes, **caractérisé en ce que** la zone d'écoulement en sortie (10), en particulier au centre, est disposée ou constituée d'une paroi de chambre de procédé (7d), en particulier conique, limitant latéralement la chambre de procédé (7).
